# EUROPÄISCHE PATENTSCHRIFT

(11) **EP 2 608 331 B1**
(45) Veröffentlichungstag und Bekanntmachung des Hinweises auf die Patenterteilung: **18.05.2016**
(21) Anmeldenummer: 12194555.4
(22) Anmeldetag: 28.11.2012
(51) Int. Cl.: H02G 1/08

(54) **VORRICHTUNG ZUM SCHIEBEN UND/ODER ZIEHEN EINES BIEGEELASTISCHEN, SCHUBSTEIFEN STABELEMENTS**
DEVICE FOR PUSHING AND/OR PULLING A FLEXIBLE, COMPRESSIVELY RIGID ROD ELEMENT
DISPOSITIF DE POUSSÉE ET/OU DE TRACTION D'UNE BARRE ÉLASTIQUE RÉSISTANT AU CISAILLEMENT

(30) Priorität: 22.12.2011 DE 202011052419 U; 12.04.2012 DE 202012101331 U
(43) Veröffentlichungstag der Anmeldung: 26.06.2013
(73) Patentinhaber: Katimex Cielker GmbH, 54584 Jünkerath (DE)
(72) Erfinder: Stähr, Christian, 54589 Stadtkyll (DE)
(74) Vertreter: Stenger Watzke Ring

(56) Entgegenhaltungen:
- DE-A1- 10 303 033
- US-A1- 2009 224 220

## Beschreibung

Die Erfindung betrifft eine Vorrichtung zum Schieben und/oder Ziehen eines biegeelastischen, schubsteifen Stabelements, beispielsweise eines Glasfaserstabs, eines Kabels oder dergleichen.

Um elektrische Kabel oder andere zumindest beschränkt biegbare Energieleiter in Leerrohre eines Gebäudes oder dergleichen einzuziehen ist es üblich in einem ersten Schritt ein biegeelastisches, schubsteifes Stabelement, beispielsweise einen Glasfaserstab in das Leerrohr einzuschieben, bis das Stabelement an einem Ende des Leerrohres heraustritt, um dort beispielsweise ein Kabel an das Stabelement anzuschließen. Anschließend wird das Stabelement mit dem angekuppelten Kabel aus dem Leerrohr herausgezogen, sodass das Kabel in das Leerrohr eingezogen ist.

Bei diesem Vorgehen durchläuft das Stabelement auch Biegungen und Krümmungen des Leerrohres, welche das Einführen des Stabelements aufgrund erhöhter Reibung in diesen Bereichen erschweren. Gleiches gilt hinsichtlich solcher Leerrohre, die schon mit Kabeln besetzt sind und die ein weiteres Kabel aufnehmen sollen. Auch hier können die bereits in dem Leerrohr befindlichen Kabel einen erhöhten Reibwiderstand darstellen, der das Einschieben des Stabelements erschwert. Zu berücksichtigen ist hierbei, dass ein solches Stabelement nur einen sehr geringen Durchmesser von beispielsweise 3 bis 8mm aufweist. Darüber hinaus weisen derartige Stabelemente aufgrund der bekannten Reibungswiderstände eine glatte Oberfläche auf, die ein Übertragen einer Schubkraft mit der Hand eines Nutzers erschwert.

US 2009/224220 offenbart eine Vorrichtung zum Schieben und/oder Ziehen eines biegeelastischen, schubsteifen Stabelements, beispielsweise eines Glasfaserstabs, eines Kabels oder dergleichen, mit einem Gehäuse und einer in dem Gehäuse angeordneten Klemmeinrichtung, wobei das Gehäuse eine Aufnahme für das Stabelement aufweist, wobei die Aufnahme eine Bewegung des Stabelements relativ zum Gehäuse ermöglicht und wobei die Klemmeinrichtung die Bewegung des Stabelements relativ zum Gehäuse in einer Längsrichtung beschränkt oder sperrt.

Aus dem Stand der Technik sind Hilfsmittel bekannt, die das Schieben und/oder Ziehen eines biegeelastischen Stabelements in diesen Fällen vereinfachen. Beispielsweise sind solche Hilfsmittel bekannt, die aus einem biegbaren Elastomer bestehen, der im Wesentlichen kreisförmig ausgebildet ist und eine radial verlaufende Ausnehmung aufweist, die der Aufnahme des Stabelements dient. Bei diesen Hilfsmitteln wird der Elastomer nach Aufnahme des Stabelements mit seinen beidseits der Ausnehmung befindlichen Abschnitten aufeinander zu gebogen, sodass das Stabelement vollständig von dem Elastomer umschlossen ist. Aufgrund der Größe des Elastomers kann dieses besser ergriffen und anschließend der Stab aufgrund des hohen Reibwiderstandes auf der Oberfläche des Elastomers verschoben werden. Grundsätzlich haben sich diese Hilfsmittel bewährt, sie unterliegen aber einem starken Verschleiß und neigen zum Bruch im Bereich der Ausnehmung aufgrund der häufigen Biegevorgänge. Des Weiteren gehen derartige Hilfsmittel häufig verloren und stehen dann für die Ausführung weiterer Schiebe- und Zieharbeiten nicht mehr zur Verfügung.

Ausgehend von diesem Stand der Technik liegt der Erfindung die Aufgabe zu Grunde, eine gattungsgemäße Vorrichtung zu schaffen, die die voranstehend genannten Merkmale vermeidet und insbesondere für eine Vielzahl unterschiedlicher Stabelemente verwendbar ist.

Diese Aufgabe wird durch die Merkmale des Ansprachs 1 gelöst.

Die erfindungsgemäße Vorrichtung weist somit ein Gehäuse auf, in dem eine Klemmeinrichtung derart angeordnet ist, dass ein Stabelement in das Gehäuse derart eingeführt werden kann, dass das Stabelement mittels der Klemmeinrichtung aufgrund eines Reibschlusses verschiebbar ist. Dies erfolgt in einer ersten Bewegungsrichtung der Vorrichtung, während in einer zweiten, dem gegenüber in entgegengesetzter Richtung verlaufenden Bewegungsrichtung die Klemmeinrichtung freigibt, sodass die Vorrichtung relativ ungehindert relativ zum Stabelement bewegbar ist. Bei dieser Vorrichtung besteht der Vorteil, dass die Vorrichtung bei der Schiebe- und Zieharbeit grundsätzlich in Kontakt mit dem Stabelement stehen kann. Die Bewegung der Vorrichtung in oszillierender Weise führt dazu, dass das Stabelement mittels der Vorrichtung in einer ersten Richtung vorgeschoben wird, während in einer zweiten, der ersten Richtung entgegengesetzten Richtung die Vorrichtung relativ zum Stabelement verschiebbar ist, ohne dass die Gefahr besteht, dass das Stabelement bei dieser Bewegung erneut aus dem Leerrohr herausgezogen wird.

Gemäß einer bevorzugten Ausführungsform der erfindungsgemäßen Vorrichtung ist das Gehäuse im Wesentlichen zylindrisch ausgebildet. Ferner erstreckt sich die Aufnahme in Längsachsenrichtung des Gehäuses. Die zylindrische Ausgestaltung des Gehäuses dient dazu, dieses in einfacher und komfortabler Weise mit der Hand ergreifen zu können, wobei die bestimmungsgemäße Betätigung der Vorrichtung in ergonomischer Weise erfolgen kann. Bei dieser Ausgestaltung hat es sich dann auch als vorteilhaft erwiesen, die Aufnahme in Längsachsenrichtung des Gehäuses verlaufend anzuordnen, sodass die Bewegungsrichtung der Vorrichtung bei bestimmungsgemäßer Anwendung ebenfalls in Längsachsenrichtung des Gehäuses erfolgt.

Nach einem weiteren Merkmal der Erfindung ist vorgesehen, dass die Aufnahme als eine sich über die Länge des Gehäuses erstreckende Nut mit v-förmigem Querschnitt ausgebildet ist. Mit dieser Ausgestaltung kann das Stabelement in einfacher Weise in die Aufnahme eingelegt werden. Ein Einfädeln des Stabelementes beispielsweise in eine Bohrung des Gehäuses ist nicht erforderlich. Die Nut mit v-förmigem Querschnitt hat den Vorteil, dass in die Aufnahme in einfacher Weise Stabelemente unterschiedlicher Durchmesser eingebracht werden können.

Vorzugsweise ist die Klemmeinrichtung reibschlüssig mit dem Stabelement verbindbar. Die Klemmeinrichtung weist nach einem weiteren Merkmal der Erfindung zumindest zwei Klemmbacken auf, die federbelastet in einer Aufnahme des Gehäuses angeordnet sind. Diese Klemmbacken können entgegen der Federkraft voneinander entfernt werden, sodass die Feder die Klemmbacken in Ausgangsposition derart verschieben, dass die Klemmbacken mit Ihren Reibflächen aneinander anliegen.

Neben einer solchen Ausgestaltung mit einer Feder besteht natürlich auch die Möglichkeit, dass die Vorrichtung Klemmbacken aufweist, die aufgrund der Beschleunigung der Vorrichtung bei deren Bewegung bewegbar sind, sodass sie bei einer Bewegung in einer ersten Richtung mit ihren Reibflächen aufeinander zu bewegt werden, während eine Bewegung der Vorrichtung in eine zweite, entgegengesetzte Richtung für eine Bewegung der Klemmbacken sorgt, bei der die Reibflächen der Klemmbacken voneinander entfernt werden, sodass ein sich in der Vorrichtung befindliches Stabelement freigegeben wird und die Vorrichtung demzufolge in Längsachsenrichtung des Stabelements bewegbar ist, ohne eine Reibkraft auf das Stabelement zu übertragen. Bei dieser Ausgestaltung kann die Funktionsweise der Vorrichtung beispielsweise durch die Verwendung entsprechender Materialien hoher Dichte verbessert werden, da derartige Materialien, beispielsweise Metall gegenüber Kunststoff hohe Trägheitsmomente aufweisen, die für die Bewegung der Klemmbacken zueinander benutzt werden können.

Bei einem weiteren Merkmal der Erfindung ist vorgesehen, dass die Klemmeinrichtung über einen Schieber in eine die Aufnahme des Stabelements ermöglichende Öffnungsstellung überführbar ist. Ein solcher Schieber verläuft beispielsweise parallel zur Aufnahme der Vorrichtung und ist mittelbar oder unmittelbar an zumindest eine Klemmbacke angeschlossen, sodass über den Schieber, der außenseitig einen Fingeransatz aufweist, die Klemmbacken entgegen der Federkraft verschiebbar sind. Hierdurch werden die Klemmbacken mit ihren Reibflächen voneinander weg geschoben und die Möglichkeit eröffnet, das Stabelement zwischen den Klemmbacken anzuordnen.

Alternativ kann aber auch vorgesehen sein, dass die Klemmbacken selbst eine im Querschnitt v-förmige Nut aufweisen, über die ein Stabelement zwischen die Klemmbacken einführbar ist. Durch die Ausgestaltung dieser v-förmigen Nut, kann das Stabelement in einem ersten Schritt in diese Nut eingeführt werden und anschließend durch Anheben der Vorrichtung die Klemmbacken auseinander schieben.

Gemäß einer weiteren Ausgestaltung der Erfindung ist vorgesehen, dass das Gehäuse aus zwei Hälften besteht, die miteinander verbindbar, insbesondere verschraubbar sind. Diese Ausgestaltung dient in erster Linie der vereinfachten Herstellung und Montage einer erfindungsgemäßen Vorrichtung, bei der die Klemmbacken und deren Bewegungsmechanik in einfacher Weise vormontiert und anschließend in eine Gehäusehälfte eingesetzt werden kann, bevor die zweite Hälfte des Gehäuses aufgesetzt und mit der ersten Hälfte verbunden, insbesondere verschraubt wird.

Die Klemmeinrichtung ist an mit dem Stabelement in Kontakt bringbaren Oberflächen reibungserhöhend ausgebildet. Dies kann beispielsweise nach einem weiteren Merkmal der Erfindung durch eine Verzahnung erfolgen. Denkbar sind aber auch Beschichtungen, die über einen längeren Zeitraum eine erhöhte Kohäsion oder Adhäsion bereitstellen.

Vorzugsweise besteht das Gehäuse aus einem zähharten Kunststoff, der eine Härte aufweist, die ausreicht, um den rauen Baustellenbedingungen zu widerstehen. Die Ausgestaltung aus Kunststoff hat darüber hinaus Kosten- und Gewichtsvorteile. Des Weiteren lassen sich bei der Ausgestaltung aus Kunststoff die reiberhöhenden Oberflächen mit geringem Aufwand herstellen.

Um die Handhabbarkeit der Vorrichtung zu verbessern ist nach einem weiteren Merkmal der Erfindung vorgesehen, dass das Gehäuse an seinen in Längsachsenrichtung angeordneten Enden über die Außenmantelfläche hervorstehende Querschnittserweiterungen aufweist, die als Anlageflächen dienen. Die Vorrichtung erhält hierdurch eine hantelartige Formgebung, wobei zwischen den beiden Querschnittserweiterungen die Handhabungsfläche zur Auflage einer Hand eines Nutzers vorgesehen ist, sodass das Gehäuse vorzugsweise zwischen den Querschnittserweiterungen eine axiale Länge von 8 bis 15 cm, insbesondere von 10 cm aufweist. Durch die Querschnittserweiterung wird verhindert, dass der Nutzer bei plötzlich auftretendem hohem Widerstand während des Einschiebens oder Ausziehens des Stabelements vom Gehäuse der Vorrichtung abrutscht. Durch diese Ausgestaltung werden daher auch Verletzungsrisiken bei der Betätigung der Vorrichtung vermieden.

Gemäß einem weiteren Merkmal der Erfindung ist vorgesehen, dass die Aufnahme im Gehäuse mit einem Verschlusselement gegen ein unbeabsichtigtes Heraustreten des Stabelements rechtwinklig zur Verschieberichtung des Stabelements im Gehäuse verschließbar ist. Dieses Verschlusselement verhindert somit ein Abrutschen der Vorrichtung bei der bestimmungsgemäßen Handhabung bei dem das Stabelement aus der Aufnahme heraustritt. Vorzugsweise handelt es sich um ein formschlüssiges Verschlusselement, wobei auch zwei an gegenüberliegenden Enden der Vorrichtung angeordneter Verschlusselemente vorgesehen sein können, die somit die Führung des Stabelements im Gehäuse verbessern.

Vorzugsweise besteht das Verschlusselement aus zumindest einem schwenkbar im Gehäuse gelagerten Riegel, der vorzugsweise mittels des Schiebers betätigbar ist. Zu diesem Zweck kann der Riegel schwenkbeweglich im Gehäuse gelagert sein, wobei die Schwenkbewegung über das Steuerelement eingeleitet wird, welches Steuerelement mit dem Schieber verbunden ist. Über das Steuerelement wird darüber hinaus auch die Klemmeinrichtung betätigt. Der Riegel, vorzugsweise besteht das Verschlusselement aus zwei paarig angeordneten Riegeln, ist im Wesentlichen L-förmig ausgebildet, wobei ein längerer Schenkel des Riegels parallel zur Aufnahme ausgerichtet ist, während der kürzere Schenkel des Riegels in die Aufnahme eingreift und über das Steuerelement aus der Aufnahme heraus geschwenkt werden kann.

Vorzugsweise ist vorgesehen, dass das Verschlusselement mittels des Schiebers derart bewegbar ist, dass über einen ersten Abschnitt eines Bewegungsweges des Schiebers die Klemmeinrichtung geöffnet wird, bevor über einen zweiten Abschnitt des Bewegungsweges des Schiebers das Verschlusselement aus seiner Schließstellung in eine Öffnungsstellung überführt wird, die eine Entnahme des Stabelements aus der Aufnahme des Gehäuses ermöglicht. Diese Ausgestaltung hat den Vorteil, dass das Stabelement während der bestimmungsgemäßen Handhabung der Vorrichtung mit der regelmäßigen Öffnung der Klemmeinrichtung um die Vorrichtung relativ zum Stabelement verschieben zu können durch das Verschließelement in der Aufnahme gehalten wird. Demzufolge ist der Bewegungsweg des Schiebers in zwei Abschnitte unterteilt, wobei der Schieber im ersten Abschnitt seines Bewegungsweges lediglich die Klemmeinrichtung betätigt, während über den zweiten Abschnitt des Bewegungsweges das Verschlusselement geöffnet wird, insbesondere die beiden Riegel des Verschlusselementes in entgegengesetzte Richtungen verschwenkt werden. Gleichzeitig kann hier natürlich eine weitere Öffnung der Klemmeinrichtung einhergehen.

Das Steuerelement weist zu diesem Zweck eine Kulissenführung auf, in die ein Stift des Riegels eingreift, so dass über die Kulissenführung der Riegel bestimmungsgemäß um eine Schwenkachse verschwenkt wird.

Weitere Merkmale und Vorteile der Erfindung ergeben sich aus der nachfolgenden Beschreibung der zugehörigen Zeichnung, in der bevorzugte Ausführungsformen der erfindungsgemäßen Vorrichtung dargestellt sind. In der Zeichnung zeigen:
- Fig. 1: eine Prinzipskizze einer ersten Ausführungsform einer erfindungsgemäßen Vorrichtung im Längsschnitt;
- Fig. 2: eine Prinzipskizze einer zweiten Ausführungsform der Vorrichtung im Längsschnitt;
- Fig. 3: eine dritte Ausführungsform der Vorrichtung in perspektivischer Ansicht;
- Fig. 4: die Vorrichtung gemäß Fig. 3 in Draufsicht;
- Fig. 5: die Vorrichtung gemäß den Fign. 3 und 4 in Seitenansicht;
- Fig. 6: die Vorrichtung gemäß den Fign. 3 bis 5 in Ansicht;
- Fig. 7: die Vorrichtung gemäß den Fign. 3 bis 6 in perspektivisch dargestellten Längsschnitt:
- Fig. 8: eine vierte Ausführungsform der Vorrichtung in einem ersten perspektivisch dargestellten Längsschnitt;
- Fig. 9: die Vorrichtung gemäß Fig. 8 in einem zweiten perspektivisch dargestellten Längsschnitt;
- Fig. 10: eine fünfte Ausführungsform der Vorrichtung im Längsschnitt in einer ersten Stellung;
- Fig. 11: die Vorrichtung gemäß Fig. 10 in einer zweiten Stellung und
- Fig. 12: die Vorrichtung gemäß den Fign. 10 und 11 in einer dritten Stellung.

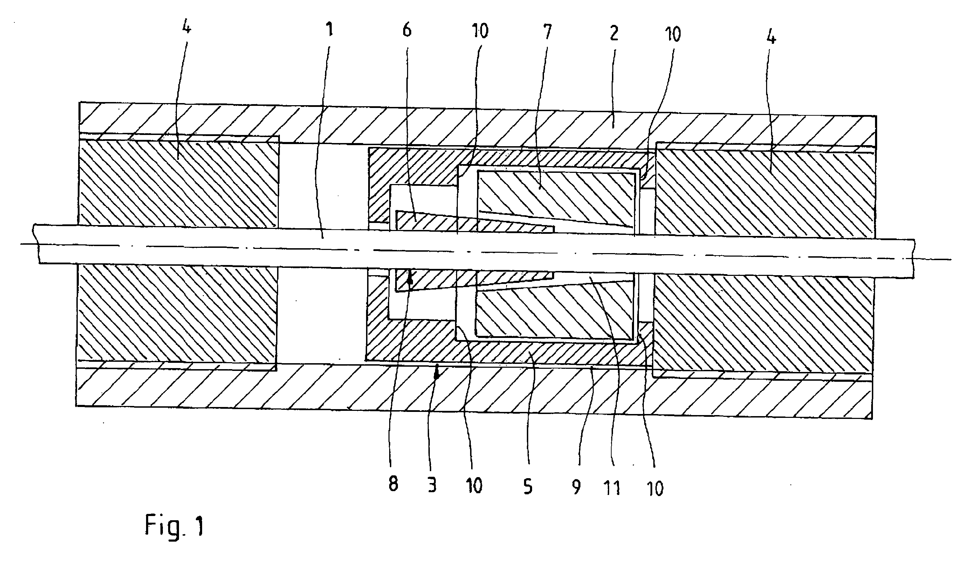

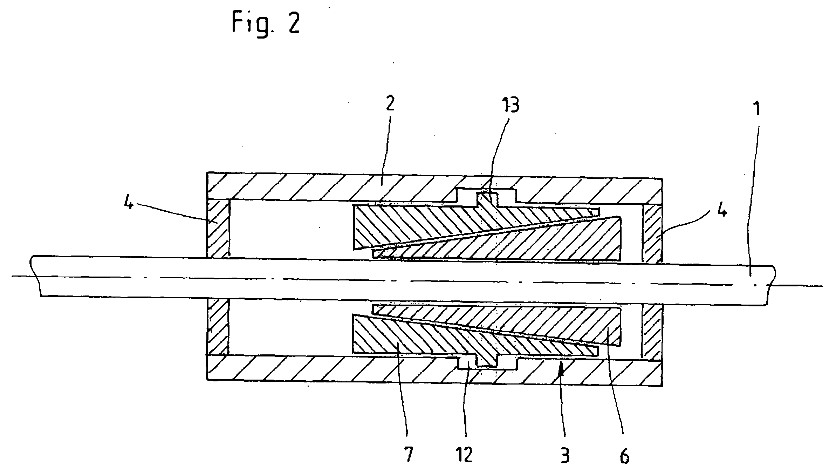

Die Fign.1 und 2 zeigen zwei unterschiedliche Ausführungen einer erfindungsgemäßen Vorrichtung zum Schieben und/oder Ziehen eines biegeelastischen, schubsteifen Stabelements 1 in jeweils einer Prinzipdarstellung. Das Stabelement 1 ist beispielsweise als Glasfaserstab ausgebildet und kann mit einem in ein Leerrohr einzuziehendes Kabel verbunden werden. Die Vorrichtung besteht aus einem Gehäuse 2, welches im Wesentlichen hohlzylindrisch und demnach rohrabschnittförmig ausgebildet ist. In dem Gehäuse angeordnet ist eine Klemmeinrichtung 3, die begrenzt innerhalb des Gehäuses 2 relativ zu diesem bewegbar gelagert ist. Das Gehäuse 2 wird endseitig durch 2 Einsätze 4 verschlossen, wobei die Einsätze 4 beispielsweise im Bereich ihrer Außenmantelfläche einen Gewindeabschnitt aufweisen, der mit einem Innengewinde im Gehäuse 2 korrespondiert. Die Einsätze 4 sind derart ausgebildet, dass das Stabelement 1 durch die Einsätze 4 geführt ist.

Das Stabelement 1 durchgreift auch die Klemmeinrichtung 3, die eine Außenkontur aufweist, welche mit der Innenkontur des Gehäuses 2 im Wesentlichen übereinstimmt und einen äußeren Abschnitt 5 aufweist, der innerhalb des Gehäuses 2 zwischen den Einsätzen 4 bewegbar gelagert ist. In dem Abschnitt 5 ist ein erster Klemmbacken 6 und ein zweiter Klemmbacken 7 angeordnet, die wiederum relativ zum äußeren Abschnitt 5 bewegbar in der Klemmeinrichtung angeordnet sind.

Der erste Klemmbacken 6 weist eine Bohrung 8 auf, deren Durchmesser mit dem Außendurchmesser des Stabelements 1 übereinstimmt, sodass der Klemmbacken 6 das Stabelement reibschlüssig aufnimmt. Die Außenmantelfläche des Klemmbackens 6 ist konisch ausgebildet, sodass der Außendurchmesser des Klemmbackens 6 in Längsachsenrichtung des Stabelements 1 ab- bzw. zunimmt.

Der zweite Klemmbacken 7 ist bewegbar in einer Tasche 9 der Klemmeinrichtung 3 angeordnet, wobei die Tasche 9 in Längsachsenrichtung des Gehäuses 2 bzw. der Klemmeinrichtung 3 Anschlagflächen 10 aufweist, die mit dem Klemmbacken 7 in Kontakt bringbar sind. Zwischen den Anschlagflächen 10 ist der Klemmbacken 7 relativ zum Abschnitt 5 der Klemmeinrichtung 3 bewegbar.

Der Klemmbacken 7 weist ferner eine in seiner Längsachsenrichtung verlaufende konische Bohrung 11 auf, die der Aufnahme des Klemmbackens 6 dient, wobei der Klemmbacken 6 mit seiner Außenmantelfläche mit der Innenmantelfläche der Bohrung 11 des Klemmbacken 7 in Kontakt bringbar ist. Der Kontakt erfolgt hier reibschlüssig.

Durch eine Bewegung des Gehäuses 2 relativ zum Stabelement 1 und aufgrund seiner Trägheit wird der Klemmbacken 7 relativ zum Gehäuse 2 bewegt, wodurch der Klemmbacken 7 in Kontakt mit dem Klemmbacken 6 tritt und das Stabelement 1 bei Bewegung des Gehäuses 2 in einer ersten Bewegungsrichtung mit dem Klemmbacken 6 verklemmt, sodass bei weitergeführter Bewegung das Stabelement 7 mit dem Gehäuse 2 geschoben bzw. gezogen wird. Wird das Gehäuse 2 demgegenüber in die entgegengesetzte Richtung bewegt, so löst sich der Klemmbacken 7 aufgrund seiner Trägheit vom Klemmbacken 6 und gibt das Stabelement 1 frei, sodass das Gehäuse 2 relativ zum Stabelement 1 bewegbar ist. Eine erneute Bewegung des Gehäuses in die voranstehend zuerst beschriebene Bewegungsrichtung führt dann wieder zu einer Verklemmung des Klemmbackens 6 mit dem Stabelement 1, sodass ein weitergehendes Vorschieben oder Herausziehen des Stabelements 1 mittels der Vorrichtung möglich ist.

Fig. 2 zeigt eine von Fig. 1 abweichende Ausgestaltung mit grundsätzlich übereinstimmender Funktionsweise.

Im Unterschied zur Fig. 1 weist die Ausführungsform gemäß Fig. 2 im Bereich der Innenmantelfläche des Gehäuses 2 eine umlaufende Ringnut 12 auf, in die ein ringförmig umlaufender Vorsprung 13 im Bereich der Außenmantelfläche des Klemmbackens 7 eingreift. Der Vorsprung 13 hat hierbei eine gegenüber der Breite der Ringnut 12 geringere Breite, sodass der Klemmbacken 7 relativ zum Gehäuse 2 innerhalb des Eingriffs des Vorsprungs 13 in die Ringnut 12 bewegbar ist. Auch bei der Ausführungsform gemäß Fig. 2 wird durch eine Relativbewegung der beiden Klemmbacken 6, 7 bzw. der Klemmeinrichtung 3 zum Gehäuse 2 in der ersten Bewegungsrichtung des Gehäuses 2 eine klemmende Verbindung zwischen der Klemmeinrichtung 3 und dem Stabelement 1 bereitgestellt, während in der gegenüberliegenden Bewegungsrichtung diese Klemmwirkung aufgehoben wird.

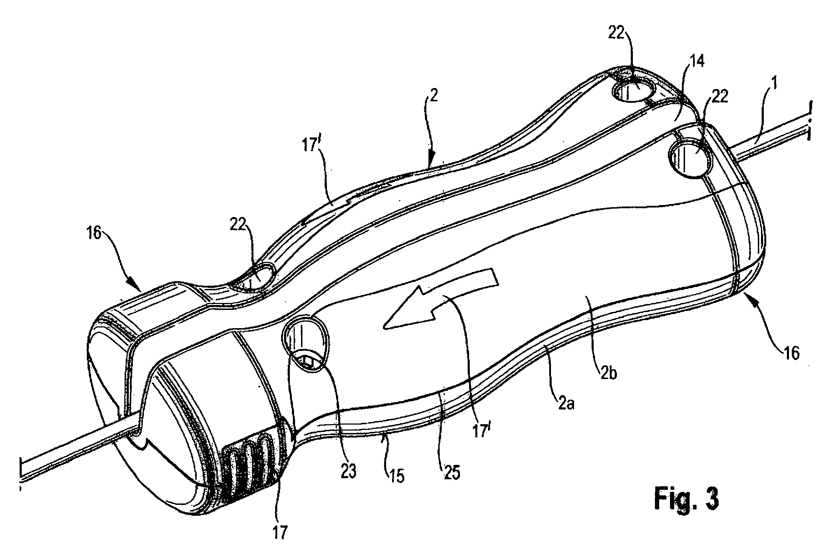

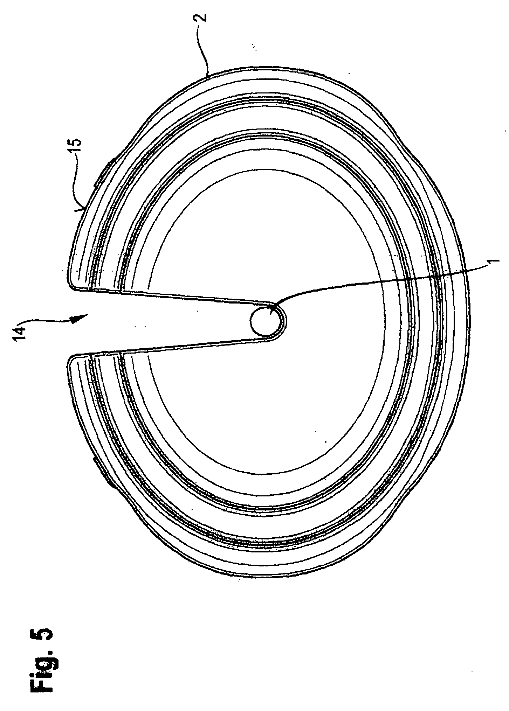

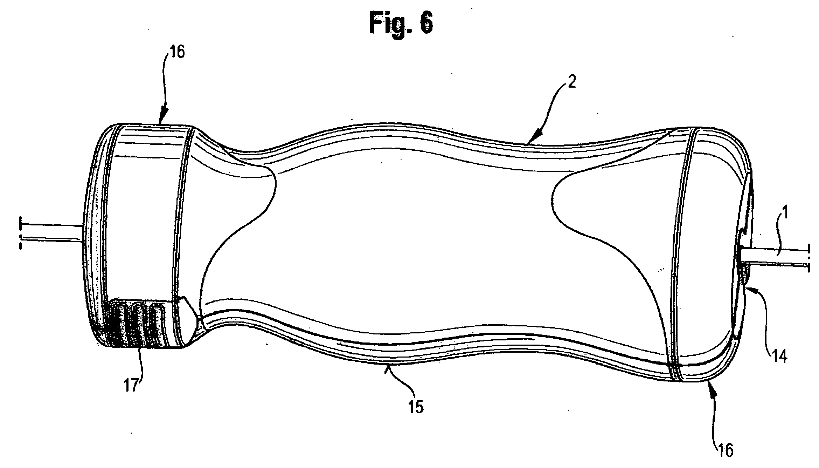

In den Fign. 3 bis 7 ist eine erfindungsgemäße Vorrichtung in konkreter Ausgestaltung dargestellt. Fig. 3 zeigt in perspektivischer Ansicht das Gehäuse 2, welches im Wesentlichen hantelförmig ausgebildet ist und in seiner Längsachsenrichtung verlaufend eine Nut 14 aufweist, die im Querschnitt im Wesentlichen V-förmig ausgebildet ist und die der Aufnahme des Stabelements 1 dient.

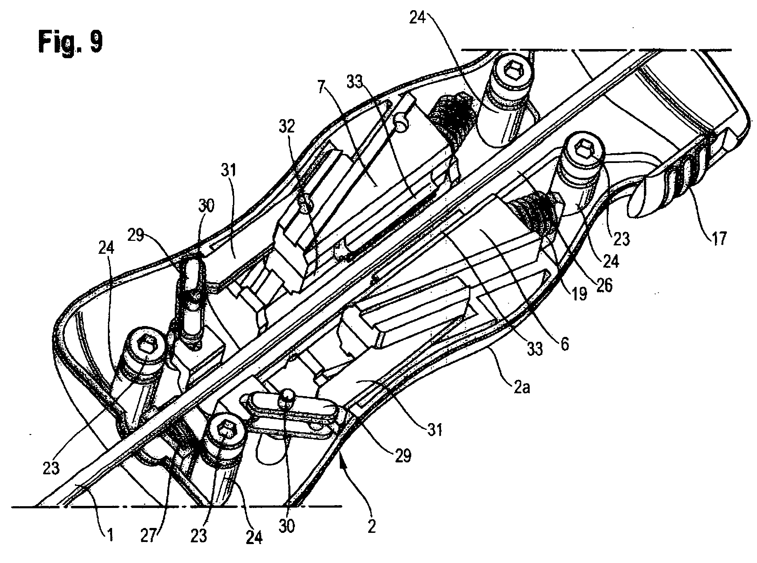

Das Gehäuse 2 besteht aus zwei Gehäusehälften 2a und 2b, die miteinander verschraubt sind. Zu diesem Zweck weist die Gehäusehälfte 2b hohlzylindrische Öffnungen 22 auf, die der Aufnahme von Schrauben 23 dienen, welche die beiden Gehäusehälften 2a und 2b miteinander verbinden. Demzufolge hat die Gehäusehälfte 2a in ihrem Innenraum zylindrisch ausgebildete Aufnahmen 24 (Fig. 9) die hohlzylindrisch ausgebildet sind und ein nicht näher dargestelltes Innengewinde aufweisen. Da das Gehäuse 2 aus Kunststoff besteht, sind die Aufnahmen 24 einstückig mit der Gehäusehälfte 2a ausgebildet.

In Fig. 3 ist ergänzend eine Trennlinie 25 zwischen den beiden Gehäusehälften 2a und 2b dargestellt.

Das Gehäuse 2 der Vorrichtung hat an beiden Enden über die Außenmantelfläche 15 hervorstehende Querschnitterweiterungen 16, die der verbesserten Handhabung der Vorrichtung dahingehend dienen, dass sie als Anlage für eine die Vorrichtung handhabende Hand dienen. Zwischen den Querschnitterweiterungen 16 ist das Gehäuse 2 der Vorrichtung ballig ausgebildet, um eine ergonomisch geformte Außenmantelfläche für die handhabende Hand zu bilden.

Des Weiteren ist in Fig. 3 ein Schieber 17 erkennbar, der über nicht näher dargestellte Betätigungselemente mit der nachfolgend noch zu beschreibenden Klemmeinrichtung 3 verbunden ist, um die Klemmung der Klemmeinrichtung 3 mit dem Stabelement 1 zu manipulieren.

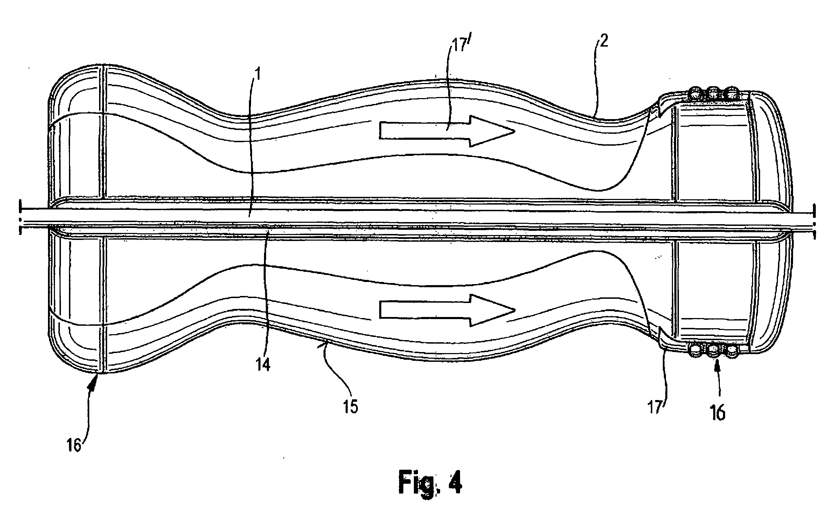

Fig. 4 zeigt weiterhin einen Pfeil 17' im Bereich des Gehäuses 2, der die Vorschubrichtung anzeigt, d.h. die Richtung, in der das Gehäuse 2 zu schieben ist, um das Gehäuse 2 bzw. dessen Klemmeinrichtung 3 mit dem Stabelement 1 zu verklemmen, sodass ein Schieben und/oder Ziehen eines Stabelements 1 möglich ist. In entgegengesetzter Richtung wird die Klemmung aufgehoben, sodass die Vorrichtung relativ zum Stabelement 1 verschiebbar ist.

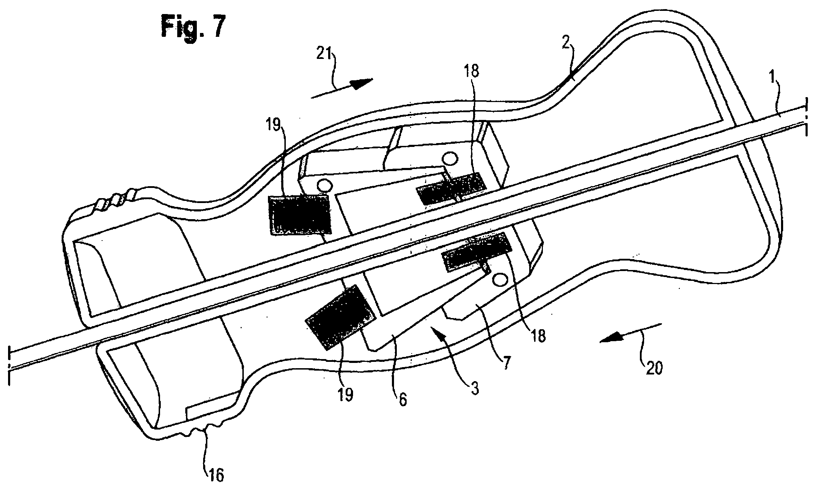

Fig. 7 zeigt die Vorrichtung gemäß den Fign. 3 bis 6 in einer perspektivischen Schnittansicht, wobei die Klemmeinrichtung 3, bestehend aus den beiden Klemmbacken 6 und 7 zu erkennen ist. Die Klemmbacke 7 stützt sich über Federn 18 gegenüber der Klemmbacke 6 ab, die wiederum über Federn 19 gegenüber dem Gehäuse 2 abgestützt ist. Erkennbar ist, dass die Federn 19 einen größeren Durchmesser aufweisen, als die Federn 18, womit angedeutet werden soll, dass die Federn 19 eine größere Federkraft auf die Klemmbacke 6 übertragen, als die Federn 18 auf die Klemmbacke 7.

Durch die Ausgestaltung der Federn und die Anordnung der Klemmbacken 6, 7 zueinander wird die Klemmwirkung zwischen der Klemmeinrichtung 3 und dem Stabelement 1 zumindest reduziert, wenn die Vorrichtung relativ zum Stabelement 1 in Richtung des Pfeils 20 bewegt wird. Wird die Vorrichtung und damit das Gehäuse 2 in Richtung des Pfeils 21 relativ zum Stabelement 1 bewegt, so erhöht sich die Klemmwirkung der Klemmeinrichtung 3 auf das Stabelement 1, sodass das Stabelement 1 zusammen mit der Vorrichtung in Richtung des Pfeils 21 bewegt und damit beispielsweise in ein Leerrohr eingeschoben wird.

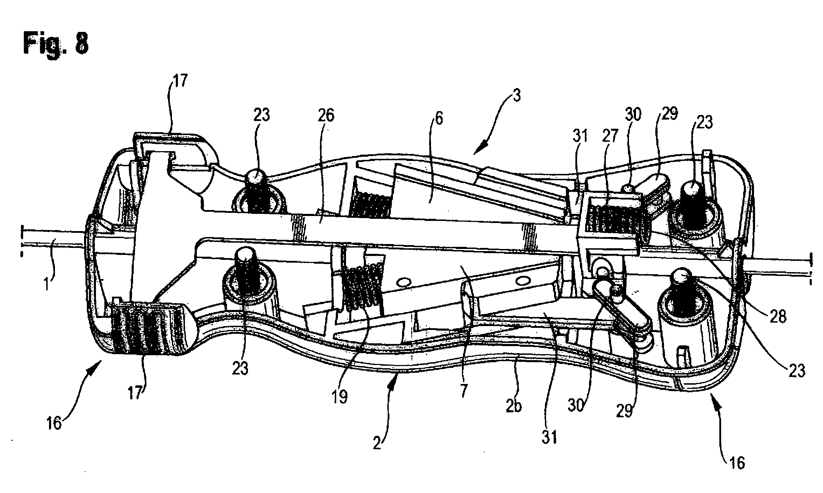

Die Fign. 8 und 9 zeigen die beiden Gehäusehälften 2a und 2b in voneinander getrennter Position. In Fig. 8 ist zu erkennen, dass das Gehäuse 2 zwei diametral gegenüberliegend angeordnete Schieber 17 im Bereich einer Querschnittserweiterung 16 aufweist. An diese Schieber 17 ist ein im Querschnitt T-förmiges Steuerelement 26 angeschlossen, welches sich parallel zur Längsachse des Gehäuses 2 erstreckt und relativ zum Gehäuse 2 verschiebbar in dem Gehäuse 2 angeordnet ist. Das Steuerelement 26 ist mit einem Ende an die Schieber 17 angeschlossen und stützt sich mit seinem zweiten gegenüberliegenden Ende unter Zwischenschaltung einer Feder 27 gegenüber dem Gehäuse 2 ab. Die Feder 27 ist zu diesem Zweck in einer einseitig offen ausgebildeten Tasche 28 angeordnet und als Schraubenfeder ausgebildet. Im Bereich der Tasche 28 weist das Steuerelement 26 zwei schwenkbeweglich angeordnete Hebel 29 auf, die um jeweils einen Zapfen 30 schwenkbeweglich im Gehäuse 2 gelagert sind. Diese zweiseitigen Hebel 29 sind mit ihrem zweiten Ende über ein Schubelement 31 mit den Klemmbacken 6 bzw. 7 verbunden. Durch ein Verschieben der Schieber 17 aus der in Fig. 8 dargestellten Position parallel zur Längsachsenrichtung des Gehäuses 2 wird das Steuerelement 26 in Richtung auf die Feder 27 verschoben, wodurch sich die Feder 27 spannt. Gleichzeitig werden die Hebel 29 um die Zapfen 30 verschwenkt, wodurch die Schubelemente 31 die Klemmbacken 6, 7 in zur Bewegungsrichtung des Steuerelements 26 entgegengesetzter Bewegungsrichtung verschoben werden. Hierdurch werden die Federn 18 gespannt und die Klemmbacken 6, 7 der Klemmeinrichtung 3 derart bewegt, dass der direkte Kontakt mit dem Stabelement 1 gelöst bzw. aufgehoben wird. Hiernach kann die Vorrichtung mit dem Gehäuse 2 relativ zum Stabelement 1 verschoben werden.

Gleichzeitig dient diese Stellung der Klemmbacken 6, 7 dazu, das Stabelement 1 in die Nut 14 derart aufzunehmen, dass das Stabelement 2 zwischen den Klemmbacken 6, 7 der Klemmeinrichtung 3 zur Anordnung gelangt.

Die Schieber 17 weisen zur verbesserten Handhabung drei Erhebungen auf, die als Fingeransätze ausgebildet sind, sodass die Oberflächenrauigkeit dieser Schieber 17 erhöht ist.

Fig. 9 zeigt die Gehäusehälfte 2a und es ist zu erkennen, dass die Klemmbacken 6, 7 auf einer jeweils auf der der gegenüberliegenden Klemmbacke 6, 7 zugewandten Oberfläche 32 ein Reibelement 33 aufweisen, wobei die Reibelemente 33 über die Klemmbacken 6, 7 in Kontakt mit der Außenmantelfläche des Stabelements 1 bringbar sind. Zu diesem Zweck weisen die Reibelemente 33 eine mit dem Stabelement 1 in Kontakt bringbare Oberfläche auf, die beispielsweise durch eine Verzahnung einen erhöhten Reibkoeffizienten aufweist, sodass ein ausreichend großer Reibschluss zwischen den Reibelementen 33 und der Außenmantelfläche des Stabelements 1 erzielbar ist. Im Übrigen ist aus Fig.9 die zurückgeschobene Position der Klemmeinrichtung 3 zu erkennen, d.h. die Position, bei der die Klemmbacken 6, 7 das Stabelement 1 freigeben, beispielsweise um das Gehäuse 2 relativ zum Stabelement 1 zu bewegen, ohne dass ein Reibschluss zwischen dem Gehäuse 2 und dem Stabelement 1 einen Vorschub des Stabelements 1 in Bewegungsrichtung des Gehäuses 2 erbringt. Dies kann beispielsweise erforderlich sein, wenn bei der üblichen Betätigung der Vorrichtung das in ein Leerrohr einzuschiebende Stabelement 1 blockiert ist und die Gefahr besteht, dass aufgrund eines hohen Widerstands und eines zu großen Abstandes zwischen der Vorrichtung und dem Leerrohr das Stabelement 1 bei weiterem Vorschub knickt. In einem solchen Fall ist es sachdienlich, die Vorrichtung und damit das Gehäuse 2 näher an das Leerrohr zu bewegen, ohne dass Reibkräfte auf das Stabelement 1 übertragen werden. Ist die Distanz zwischen dem Gehäuse 2 und dem Lehrrohr dann verkürzt ist auch die Knickgefahr für das Stabelement 1 verringert.

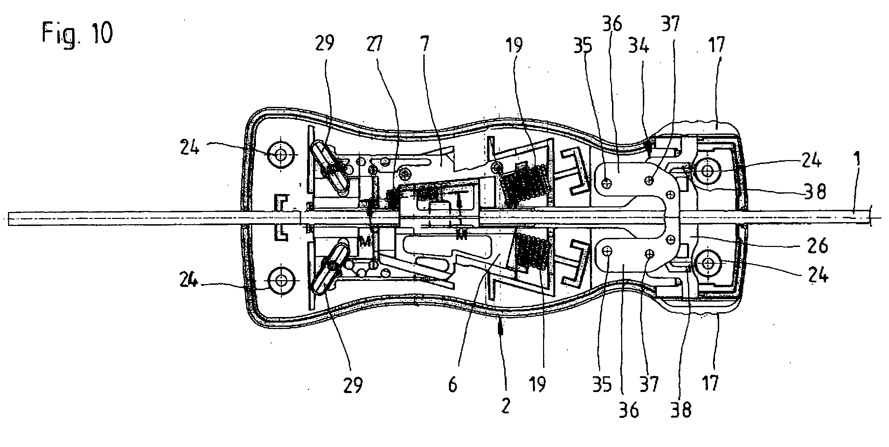

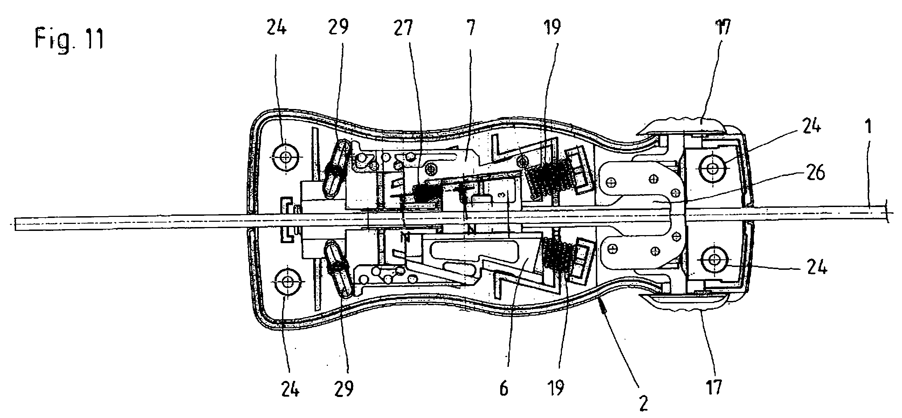

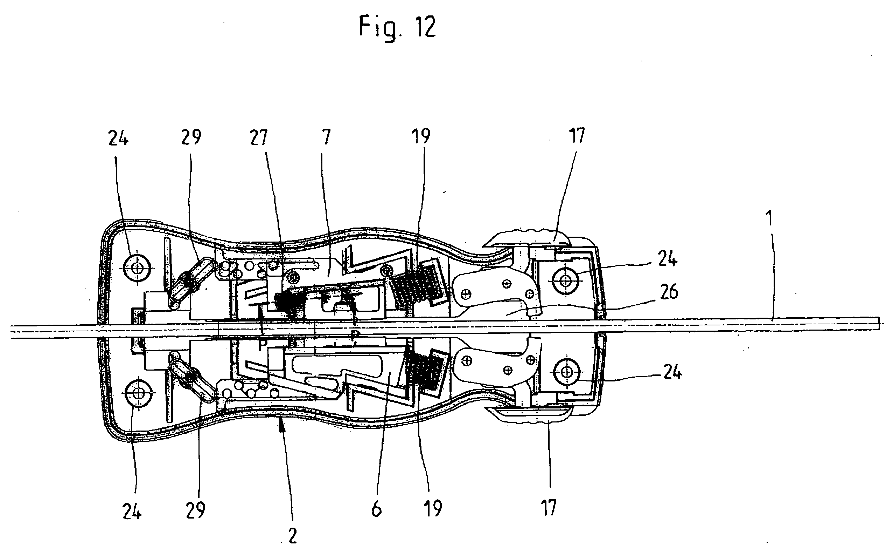

Die Fign. 10 bis 12 zeigen eine weitere Ausführungsform der erfindungsgemäßen Vorrichtung zum Schieben und/oder Ziehen eines biegeelastischen, schubsteifen Stabelements 1. Ergänzend zu den Ausführungsformen gemäß den Fign. 1 bis 9 weist die Ausführungsform gemäß den Fign. 10 bis 12 ein Verschlusselement 34 auf, welches aus zwei um jeweils eine Achse 35 verschwenkbaren Riegeln 36 besteht, wobei die Riegel 36 L-förmig ausgebildet sind. Die Achsen 35 der Riegel 36 sind in korrespondierende Öffnungen in einer Gehäusehälfte 2a, 2b gelagert. Ergänzend weisen die Riegel 36 jeweils einen Steuerstift 37 auf, die in zwei kulissenartigen Führungen 38 im Steuerelement 26 derart geführt sind, dass bei einer Bewegung des Steuerelements 26 mittels der beidseitig des Gehäuses angeordneten Schieber 17 die Riegel 36 aus der in Fig. 10 dargestellten Schließstellung in eine in Fig. 12 dargestellte Öffnungsstellung überführt werden, welche Öffnungsstellung die Herausnahme des Stabelements 1 aus der Aufnahme bei voneinander weggeschwenkten Riegeln 36 ermöglicht. Demgegenüber liegen die Riegel 36 in ihrer in Fig. 10, wie auch in Fig. 11 dargestellten Schließstellung mit ihren Stirnseiten derart aneinander an, dass die kurzen Schenkel der Riegel 36 die Aufnahme, das Stabelement 1 in dieser Aufnahme übergreifend verschließen.

Die Fign. 10 bis 12 zeigen unterschiedliche Stellungen der Schieber 17 relativ zum Gehäuse 2 der Vorrichtung.

Die Fig. 10 zeigt eine Position der Schieber 17, bei der ein bestimmungsgemäßer Gebrauch der Vorrichtung möglich ist, nämlich dahingehend, dass das Stabelement 1 in eine Richtung der Längsachse des Stabelements 1 durch eine Klemmung in der Klemmeinrichtung 3 vorgeschoben wird, während eine Bewegung der Vorrichtung in die entgegengesetzte Längsachsenrichtung des Stabelements 1 eine Relativbewegung der Vorrichtung zum Stabelement 1 ermöglicht.

Die Schieber 17 sind relativ zum Gehäuse 2 der Vorrichtung über zwei Abschnitte ihres Bewegungsweges bewegbar. Fig. 11 zeigt diesbezüglich die Stellung der Schieber 17 nachdem diese den ersten Abschnitt des Bewegungsweges überfahren haben. In dieser Stellung ist die Klemmeinrichtung 3 derart verschoben, dass das Stabelement 1 ohne Klemmung in der Aufnahme angeordnet, das Verschlusselement 34 aber noch geschlossen ist. Demgegenüber zeigt die Fig. 12 die Stellung der Schieber 17 nach Überschreiten des zweiten Abschnitts ihres Bewegungsweges. Auch in dieser Stellung ist die Klemmung der Klemmeinrichtung 3 aufgehoben. Ergänzend ist aber nun auch das Verschlusselement 34 durch Verschwenken der beiden Riegel 36 geöffnet, so dass das Stabelement 1 aus der Aufnahme des Gehäuses 2 entnommen werden kann. Selbstverständlich ist in dieser Position auch das Einlegen des Stabelements 1 in die Aufnahme des Gehäuses 2 möglich.

Die Bewegung der Riegel 36 erfolgt über die Führungen 38 im Steuerelement 26. Diese Führungen 38 sind schlitzförmig ausgebildet und weisen in einem ersten Abschnitt eine Ausrichtung parallel zur Längsachsenrichtung der Aufnahme für das Stabelement 1 auf, so dass bei einer ersten Verschiebung des Steuerelements 26 über die Schieber 17 eine Verschwenkung der Riegel 36 um die Achsen 35 nicht erfolgt. In einem weiteren Abschnitt der Führungen 38 ist die schlitzförmige Ausgestaltung dann unter einem Winkel relativ zur Längsachsenrichtung der Aufnahme für das Stabelement 1 ausgerichtet, so dass ein Weiterschieben des Steuerelements 26 dazu führt, dass die Riegel 36 um die Achsen 35 derart nach außen geschwenkt werden, dass das in die Aufnahme eingelegte Stabelement 1 freigegeben wird. Ein weiterer Abschnitt der Führungen 38 verläuft dann wieder parallel zur Längsachsenrichtung der Aufnahme für das Stabelement 1, so dass die Riegel 36 in diesem Bereich in der in Fig. 12 dargestellten geöffneten Stellung gehalten werden.

### Bezugszeichenliste

- 1: Stabelement
- 2: Gehäuse
- 2a: Gehäusehälfte
- 2b: Gehäusehälfte
- 3: Klemmeinrichtung
- 4: Einsatz
- 5: Abschnitt
- 6: Klemmbacke
- 7: Klemmbacke
- 8: Bohrung
- 9: Tasche
- 10: Anschlussfläche
- 11: Bohrung
- 12: Ringnut
- 13: Vorsprung
- 14: Nut
- 15: Außenmantelfläche
- 16: Querschnittserweiterung
- 17: Schieber
- 17': Pfeil
- 18: Feder
- 19: Feder
- 20: Pfeil
- 21: Pfeil
- 22: Öffnung
- 23: Schraube
- 24: Aufnahme
- 25: Trennlinie
- 26: Steuerelement
- 27: Feder
- 28: Tasche
- 29: Hebel
- 30: Zapfen
- 31: Schubelement
- 32: Oberfläche
- 33: Reibelement
- 34: Verschlusselement
- 35: Achse
- 36: Riegel
- 37: Steuerstift
- 38: Führung

## Patentansprüche

1. Vorrichtung zum Schieben und/oder Ziehen eines biegeelastischen, schubsteifen Stabelements (1), beispielsweise eines Glasfaserstabs, eines Kabels oder dergleichen, mit einem Gehäuse (2) und einer in dem Gehäuse (2) angeordneten Klemmeinrichtung (3), wobei das Gehäuse (2) eine sich über die Länge des Gehäuses (2) erstreckende Nut (14) als Aufnahme für das Stabelement (1) aufweist, wobei die Aufnahme eine Bewegung des Stabelements (1) relativ zum Gehäuse (2) ermöglicht und wobei die Klemmeinrichtung (3) die Bewegung des Stabelements (1) relativ zum Gehäuse (2) in einer Längsrichtung zumindest beschränkt, insbesondere sperrt und wobei das Stabelement (1) mittels der Klemmeinrichtung (3) aufgrund eines Reibschlusses verschiebbar ist.

2. Vorrichtung nach Anspruch 1,
**dadurch gekennzeichnet,**
**dass** das Gehäuse (2) im Wesentlichen zylindrisch ausgebildet ist und dass sich die Aufnahme in Längsachsenrichtung des Gehäuses (2) erstreckt.

3. Vorrichtung nach Anspruch 1 oder 2,
**dadurch gekennzeichnet,**
**dass** die sich über die Länge des Gehäuses (2) erstreckende Nut (14) mit v-förmigen Querschnitt ausgebildet ist.

4. Vorrichtung nach einem der Ansprüche 1 bis 3,
**dadurch gekennzeichnet,**
**dass** die Klemmeinrichtung (3) zumindest zwei Klemmbacken (6,7) aufweist, die federbelastet in einer Aufnahme des Gehäuses (2) angeordnet sind.

5. Vorrichtung nach einem der Ansprüche 1 bis 4,
**dadurch gekennzeichnet**, t,
dass die Klemmeinrichtung (3) über einen Schieber (17) in eine die Aufnahme des Stabelements (1) ermöglichende Öffnungsstellung überführbar ist.

6. Vorrichtung nach einem der Ansprüche 1 bis 5,
**dadurch gekennzeichnet,**
**dass** das Gehäuse (2) aus zwei Hälften besteht, die miteinander verbindbar, insbesondere verschraubbar sind.

7. Vorrichtung nach einem der Ansprüche 1 bis 6,
**dadurch gekennzeichnet,**
**dass** die Klemmeinrichtung (3) an mit dem Stabelement (1) in Kontakt bringbaren Oberflächen reibungserhöhend ausgebildet sind.

8. Vorrichtung nach einem der Ansprüche 1 bis 7,
**dadurch gekennzeichnet,**
**dass** das Gehäuse (2) aus einem zähharten Kunststoff ausgebildet ist.

9. Vorrichtung nach Anspruch 7,
**dadurch gekennzeichnet,**
**dass** die Oberflächen mit einer Verzahnung ausgebildet sind.

10. Vorrichtung nach einem der Ansprüche 1 bis 9,
**dadurch gekennzeichnet,**
**dass** das Gehäuse (2) an seinen in Längsachsenrichtung angeordneten Enden über die Außenmantelfläche (15) hervorstehende Querschnittserweiterungen (16) aufweist, die als Anlageflächen dienen.

11. Vorrichtung nach Anspruch 10,
**dadurch gekennzeichnet,**
**dass** das Gehäuse (2) zwischen den Querschnittserweiterungen (16) eine axiale Länge von 8 bis 15 cm, insbesondere von 10 cm aufweist.

12. Vorrichtung nach einem der Ansprüche 1 bis 11,
**dadurch gekennzeichnet,**
**dass** die Aufnahme im Gehäuse (2) mit einem Verschlusselement (34) gegen ein unbeabsichtigtes Heraustreten des Stabelements (1) rechtwinklig zur Verschieberichtung des Stabelements (1) im Gehäuse (2) verschließbar ist.

13. Vorrichtung nach Anspruch 12,
**dadurch gekennzeichnet,**
**dass** das Verschlusselement (34) aus zumindest einem schwenkbar im Gehäuse (2) gelagerten Riegel (36) besteht, der vorzugsweise mittels des Schiebers (17) betätigbar ist.

14. Vorrichtung nach Anspruch 12 oder 13,
**dadurch gekennzeichnet,**
**dass** das Verschlusselement (34) mittels des Schiebers (17) derart bewegbar ist, dass über einen ersten Abschnitt eines Bewegungsweges des Schiebers (17) die Klemmeinrichtung (3) geöffnet wird, bevor über einen zweiten Abschnitt des Bewegungsweges des Schiebers (17) das Verschlusselement (34) aus einer Schließstellung in eine Öffnungsstellung überführt wird, die eine Entnahme des Stabelements (1) aus der Aufnahme des Gehäuses (2) ermöglicht.

## Claims

1. A device for pushing and/or drawing a flexible, shear-resistant rod element (1), for example a glass fibre rod, a cable or the like, comprising a housing (2) and a clamping device (3) arranged in the housing (2), wherein the housing (2) comprises a groove (14) extending over the length of the housing (2) and serving as a receiving portion for the rod element (1), wherein the receiving portion allows a movement of the rod element (1) with respect to the housing (2) and wherein the clamping device (3) at least restricts, in particular blocks the movement of the rod element (1) with respect to the housing (2) in a longitudinal direction, and wherein the rod element (1) can be displaced by means of the clamping device (3) thanks to a frictional connection.

2. A device according to claim 1,
**characterized in that**
the housing (2) is substantially cylindrical and that the receiving portion extends in the direction of the longitudinal axis of the housing (2).

3. A device according to claim 1 or 2,
**characterized in that**
the groove (14) extending over the length of the housing (2) is formed with a V-shaped cross section.

4. A device according to one of the claims 1 through 3,
**characterized in that**
the clamping device (3) at least comprises two clamping jaws (6, 7) which are arranged in a spring-loaded manner in a receiving portion of the housing (2).

5. A device according to one of the claims 1 through 4,
**characterized in that**
the clamping device (3) can be transferred by a slider (17) into an opening position which allows receiving the rod element (1).

6. A device according to one of the claims 1 through 5,
**characterized in that**
the housing (2) is composed of two halves which can be connected, in particular screwed to each other.

7. A device according to one of the claims 1 through 6,
**characterized in that**
the surfaces of the clamping device (3) which can be brought into contact with the rod element (1) are friction-enhancing.

8. A device according to one of the claims 1 through 7,
**characterized in that**
the housing (2) is made of a tough plastic.

9. A device according to claim 7,
**characterized in that**
the surfaces are designed with a toothing.

10. A device according to one of the claims 1 through 9,
**characterized in that**
at its ends arranged in the direction of the longitudinal axis, the housing (2) comprises cross-sectional extensions (16) projecting over the outer cover surface (15) and serving as contact surfaces.

11. A device according to claim 10,
**characterized in that**
the housing (2) comprises an axial length comprised between 8 and 15 cm, in particular 10 cm, between the cross-sectional extensions (16).

12. A device according to one of the claims 1 through 11,
**characterized in that**
the receiving portion in the housing (2) can be closed by means of a closing element (34) for preventing the rod element (1) from unintentionally getting out in a perpendicular direction with respect to the shifting direction of the rod element (1) in the housing (2).

13. A device according to claim 12,
**characterized in that**
the closing element (34) consists of at least one latch (36) which is arranged in a pivoting manner in the housing (2) and can be preferably actuated by means of the slider (17).

14. A device according to claim 12 or 13,
**characterized in that**
the closing element (34) can be displaced by means of the slider (17), such that the clamping device (3) will be opened in a first section of a motion path of the slider (17), before the closing element (34) will be transferred from a closing position into an opening position in a second section of the motion path of the slider (17), which opening position allows the rod element (1) to be taken out of the receiving portion of the housing (2).

## Revendications

1. Dispositif destiné à pousser et/ou tirer un élément de barre (1) élastique en flexion et rigide en poussée, par exemple une barre en fibres de verre, un câble ou similaire, comprenant un boîtier (2) et un dispositif de serrage (3) disposé dans le boîtier (2), le boîtier (2) comprenant une rainure (14) s'étendant sur la longueur du boîtier (2) et servant de logement à l'élément de barre (1), le logement permettant un déplacement de l'élément de barre (1) par rapport au boîtier (2) et le dispositif de serrage (3) au moins limitant, notamment bloquant le déplacement de l'élément de barre (1) par rapport au boîtier (2) dans une direction longitudinale, et l'élément de barre (1) pouvant être déplacé par moyen du dispositif de serrage (3) grâce à une liaison par friction.

2. Dispositif selon la revendication 1,
**caractérisé en ce que**
le boîtier est essentiellement en forme cylindrique et que le logement s'étend dans la direction de l'axe longitudinal du boîtier (2).

3. Dispositif selon la revendication 1 ou la revendication 2,
**caractérisé en ce que**
la rainure (14) s'étendant sur la longueur du boîtier (2) est configurée avec une section transversale en forme de V.

4. Dispositif selon l'une des revendications 1 à 3,
**caractérisé en ce que**
le dispositif de serrage (3) comprend au moins deux mâchoires de serrage (6, 7), qui sont disposées de manière chargée par ressort dans un logement du boîtier (2).

5. Dispositif selon l'une des revendications 1 à 4,
**caractérisé en ce que**
le dispositif de serrage (3) peut être transféré par un coulisseau (17) dans une position d'ouverture permettant la réception de l'élément de barre (1).

6. Dispositif selon l'une des revendications 1 à 5,
**caractérisé en ce que**
le boîtier (2) est composé de deux moitiés qui sont susceptibles d'être reliées l'une à l'autre, notamment d'être vissées l'une à l'autre.

7. Dispositif selon l'une des revendications 1 à 6,
**caractérisé en ce que**
les surfaces du dispositif de serrage (3), lesquelles peuvent être mises en contact avec l'élément de barre (1), sont configurées de sorte qu'elles augmentent la friction.

8. Dispositif selon l'une des revendications 1 à 7,
**caractérisé en ce que**
le boîtier (2) est fabriqué en une plastique tenace.

9. Dispositif selon la revendication 7,
**caractérisé en ce que**
les surfaces sont configurées avec une denture.

10. Dispositif selon l'une des revendications 1 à 9,
**caractérisé en ce que**
le boîtier (2) comprend, à ses extrémités disposées dans la direction de l'axe longitudinal, des extensions de section transversale (16) faisant saillie au-delà de la surface enveloppe extérieure (15) et servant de surfaces d'appui.

11. Dispositif selon la revendication 10,
**caractérisé en ce que**
le boîtier (2) comprend une longueur axiale comprise entre 8 et 15 cm, notamment de 10 cm, entre les extensions de section transversale (16).

12. Dispositif selon l'une des revendications 1 à 11,
**caractérisé en ce que**
le logement dans le boîtier (2) peut être fermé par moyen d'un élément de fermeture (34) pour empêcher l'élément de barre (1) de sortir involontairement dans une direction perpendiculaire par rapport à la direction de déplacement de l'élément de barre (1) dans le boîtier (2).

13. Dispositif selon la revendication 12,
**caractérisé en ce que**
l'élément de fermeture (34) consiste en au moins un verrou (36) disposé de manière pivotante dans le boîtier (2), lequel verrou peut de préférence être actionné par moyen du coulisseau (17).

14. Dispositif selon la revendication 12 ou la revendication 13,
**caractérisé en ce que**
l'élément de fermeture (34) peut être déplacé par moyen du coulisseau (17), de sorte que le dispositif de serrage (3) est ouvert dans une première section du trajet de déplacement du coulisseau (17), avant que l'élément de fermeture (34) soit transféré d'une position de fermeture à une position d'ouverture dans une deuxième section du trajet de déplacement du coulisseau (17), laquelle position d'ouverture permet de sortir l'élément de barre (1) du logement du boîtier (2).
